# FASCICULE DE BREVET EUROPEEN

(11) **EP 3 277 903 B1**
(45) Date de publication et mention de la délivrance du brevet: **24.06.2020**
(21) Numéro de dépôt: 16713435.2
(22) Date de dépôt: 31.03.2016
(51) Int. Cl.: E06B 3/673, B23K 1/19

(54) **CORDON MÉTALLIQUE POUR LA FABRICATION D'INTERCALAIRE DANS UN VITRAGE ISOLANT**
METALLLITZE ZUR HERSTELLUNG EINES ABSTANDSHALTERS FÜR ISOLIERVERGLASSUNG
METAL CORD FOR MANUFACTURING A SPACER FOR AN INSULATING GLASS

(30) Priorité: 03.04.2015 EP 15248020
(43) Date de publication de la demande: 07.02.2018
(73) Titulaire: AGC Glass Europe, 1348 Louvain-La-Neuve (BE)
(72) Inventeur: CHORINE, Nicolas, 1490 Court-Saint-Etienne (BE); BOUESNARD, Olivier, 1460 Ittre (BE)
(74) Mandataire: Bayot, Daisy
(86) Numéro de dépôt international: PCT/EP2016/057059
(87) Numéro de publication internationale: WO 2016/156492

(56) Documents cités:
- GB-A- 794 145
- US-A- 3 927 819
- Lucas Milhaupt: "Liquidus vs Solidus", , 24 mars 2014 (2014-03-24), XP002744309, Extrait de l'Internet: URL:http://www.lucasmilhaupt.com/en-US/abo ut/blog/2014/3/liquidus-vs-solidus [extrait le 2015-09-09]

## Description

La présente invention concerne le domaine des jonctions de profilés métalliques creux. Plus particulièrement, il concerne les jonctions de profilés métalliques servant d'intercalaire à la réalisation de vitrages multiples isolants.

Un vitrage isolant (ou "Insulating glass unit" en anglais) comprend de manière classique au moins deux feuilles de verre associées ensemble par l'intermédiaire d'un cadre périphérique intercalaire qui les maintient parallèles à une certaine distance l'une de l'autre. On forme ainsi, un espace interne entre les feuilles de verre qui est fermé par le cadre périphérique intercalaire.

L'espace interne emprisonne généralement une lame de gaz, par exemple de l'air sec. Le transfert d'énergie à travers un vitrage isolant selon cette structure classique est réduit, du fait de la présence de la lame de gaz dans l'espace interne par rapport à une simple feuille de verre.

Afin d'assurer l'étanchéité du vitrage isolant, le cadre périphérique intercalaire est complété par un cordon élastomère du type caoutchouc butyle appliqué directement sur les parois du cadre intercalaire en contact avec les feuilles de verre. Ainsi, le cadre intercalaire est collé aux feuilles de verre. Par exemple, le cordon élastomère est appliqué sur les parois du cadre par extrusion au travers d'une buse.

Une fois le vitrage assemblé, le cordon élastomère d'étanchéité joue un rôle de maintien mécanique provisoire des feuilles de verre. Enfin, on injecte dans la gorge périphérique délimitée par les deux feuilles de verre et le cadre périphérique intercalaire un mastic d'étanchéité réticulable du type polysulfure, polyuréthane, ou silicone qui termine l'assemblage mécanique des feuilles de verre. Le caoutchouc butyle a principalement comme rôle de rendre étanche l'intérieur du vitrage à la vapeur d'eau et aux gaz, tandis que le mastic assure une étanchéité à la vapeur d'eau, à l'eau liquide et aux solvants.

Classiquement, le cadre périphérique intercalaire comprend un profilé métallique (par exemple en aluminium, en acier galvanisé, en acier inox, ...) creux qui est plié ou un aboutement de plusieurs portions de profilés solidarisées entre-elles. Les profilés sont garnis d'un tamis moléculaire qui a pour rôle d'absorber les molécules d'eau emprisonnées dans la lame d'air intercalaire au moment de la fabrication du vitrage, ou susceptibles de s'introduire dans le vitrage au cours de sa vie (l'étanchéité d'un vitrage isolant n'est jamais parfaite), et qui seraient susceptibles de se condenser par temps froid, entraînant l'apparition de buée.

Afin de solidariser deux extrémités de deux portions de cadre périphérique intercalaire, on utilise classiquement des pièces nommées connecteurs. Ces pièces peuvent être médianes pour effectuer des jonctions dites droites, ou d'angle pour effectuer des jonctions avec un angle non-nul, 90° typiquement. Par exemple, le brevet US6347902B1 décrit un connecteur qui est inséré à force dans les extrémités creuses de profilé du cadre intercalaire et maintenu fermement grâce à des saillies latérales de retenue qui sont orientées dans le sens opposé au sens de traction selon lequel il conviendrait de tirer sur les extrémités de profilé en cas de démontage.

Au jour d'aujourd'hui, les constructions et les éléments qu'elles comportent, notamment les vitrages, sont de plus en plus durables. Or la durabilité de l'isolation thermique d'un vitrage est directement dépendante de son étanchéité au gaz. Pour une isolation thermique durable, une fermeture étanche du cadre périphérique du vitrage est nécessaire. Or les connecteurs classiques, tels que décrits selon le brevet US6347902B1 n'offrent pas une fermeture étanche.

Depuis plusieurs années maintenant, des solutions de fermeture étanche ont été proposées pour pallier ce problème. De telles solutions sont basées sur l'utilisation de connecteurs améliorés, disposant soit de réceptacles pour la réception d'un matériau d'étanchéité avant l'étape de fermeture (comme par exemple dans le document DE202004017398) ou au moment de l'étape de fermeture (comme par exemple le document demande de brevet US 2003/0059253), soit de moyens d'étanchéité intrinsèques, faisant corps avec la base du connecteur (comme par exemple le document EP1738047A2).

Toutes ces solutions présentent au moins les désavantages suivants :
- Que ce soit pour l'injection d'un matériau d'étanchéité type butyle ou le clipsage/collage de moyens d'étanchéité sur le connecteur, une étape supplémentaire est nécessaire dans la réalisation de la connexion, une étape qui nécessite souvent un outillage bien spécifique, qui péjore souvent la rapidité de fabrication, et qui engendre dans tous les cas un coût supplémentaire par rapport aux connecteurs classiques.
- Pour chaque intercalaire (défini par son matériau, par sa forme, par son épaisseur,...), un connecteur spécifique doit être conçu et fabriqué ; ce qui multiplie les investissements nécessaires, par exemple pour de nouveaux moules pour la réalisation de connecteurs plastiques.
- La fermeture par connecteur est réalisée généralement de manière manuelle, ce qui limite à nouveau la rapidité de fabrication.

Afin de solidariser deux extrémités de deux portions de cadre périphérique intercalaire, on peut également recourir à des procédés de soudage ou brasage. Un procédé connu de soudage par courant électrique est décrit dans la demande de brevet US4704512A. Comparé à la solution des connecteurs, ce procédé de soudage offre l'avantage d'être automatique, et permet donc d'obtenir une plus grande productivité. Cependant, la soudure par courant électrique génère, à la jointure, un sillon de soudure présent sur tout le contour de la section du cadre intercalaire et notamment sur la partie de ce contour, en contact avec l'espace interne, qui est visible pour les utilisateurs. Ce sillon nuit donc à l'esthétique du panneau de vitrage isolant équipé avec le cadre intercalaire, de même qu'à l'application des cordons d'étanchéité, typiquement en butyle. Ainsi, une étape supplémentaire de polissage de ce sillon est alors nécessaire pour améliorer l'esthétique. De plus, ce procédé de soudure à courant électrique a pour inconvénient de produire une jointure présentant des défauts de type fissures, craquelures, ... qui génèrent de la diffusion au niveau des zones défectueuses. Un tel procédé ne permet donc pas d'obtenir une jointure étanche de manière fiable.

Le brasage est également connu pour la solidarisation de portions de cadre périphérique intercalaire. De tels procédés de brasage sont cités notamment dans les documents US3927819A, DE8616317U1 et FR2449222A1. Il résulte de ces procédés un cordon métallique, de nature différente de celle du profilé métallique servant d'intercalaire, et joignant les portions du profilé. Cependant, aucune spécification n'est apportée à ces procédés de brasage ou au cordon métallique; et par conséquent, il n'est pas possible de juger de la qualité et des performances d'une telle solidarisation. Toute la difficulté associée à ce procédé réside dans la réalisation d'un cordon métallique qui soit suffisamment robuste mécaniquement et étanche tout en préservant une esthétique de jonction discrète, ainsi qu'un relief aussi faible que possible pour ne pas entraver la déposition des cordons d'étanchéité.

Le brevet US3927819 décrit quant à lui un procédé de fabrication d'un cadre métallique réalisé à partir de profilés creux coupés à longueur et biseautés à leurs extrémités pour former les angles du cadre. Des connecteurs en forme de L qui s'adaptent à l'intérieur des profilés métalliques viennent renforcer les coins. Dans une étape ultérieure, les extrémités biseautées des profilés métalliques sont brasées ou soudées. Ce procédé soufre des inconvénients de l'utilisation de connecteurs pré-cités et à nouveau, aucune spécification n'est apportée au procédé de soudure ou brasage ou au cordon métallique ne permettant ainsi pas de juger de la qualité et des performances d'une telle solidarisation.

L'invention vise à remédier aux défauts des jonctions connues en ce qu'elle fournit un cordon métallique qui présente les avantages suivants :
- excellente étanchéité aux gaz ;
- maintien d'une bonne résistance mécanique du profilé au droit de la jonction ;
- absence de bourrelet en relief de la surface extérieure du profilé et maintien d'une bonne esthétique jusque dans le vitrage final ;
- injection facilitée du dessicant de l'atmosphère interne au vitrage à l'intérieur du profilé ;
- absence d'impact négatif sur la productivité de la fabrication du vitrage ;
- possibilité de s'affranchir de l'utilisation d'éléments de type connecteurs .

A cette fin, l'invention concerne un cordon métallique formant une jonction entre les extrémités d'au moins un profilé métallique creux apte à servir d'intercalaire à la réalisation de vitrages multiples isolants, ledit cordon ayant une température de liquidus inférieure à la température de solidus du profilé et adhérant de manière permanente aux surfaces du profilé selon lequel le cordon métallique déborde à l'intérieur dudit au moins un profilé creux sur au moins une partie de la longueur du cordon.

Par cordon métallique, on entend désigner un composé de nature métallique, un métal pur ou un alliage de plusieurs métaux, de forme généralement allongée.

Selon l'invention, le cordon métallique forme une jonction entre les extrémités d'au moins un profilé métallique creux. Par jonction, on entend solidarisation d'au moins deux objets, ou parties d'un objet. Par profilé métallique creux, on désigne un profilé métallique muni de parois définissant au moins une section en forme de boîte creuse. Le cordon réalise une jonction entre les extrémités de deux profilés de même section et de même matière. Il peut aussi ne réaliser la jonction que d'un seul profilé lorsque ce dernier est recourbé sur lui-même pour former une figure plane fermée, courbe et/ou polygonale. En variante, le cordon métallique peut joindre chaque paire d'extrémités de profilés lorsque ces derniers sont aboutés pour former une figure plane fermée, courbe et/ou polygonale.

Selon l'invention, le cordon métallique possède une température de liquidus et une température de solidus bien particulières. Les vocables « liquidus » et « solidus » ont l'acception communément admise dans la métallurgie : la température de liquidus d'un matériau est la température au-delà de laquelle un matériau est complètement à l'état liquide, tandis que la température de solidus est la température en-dessous de laquelle un matériaux est complètement à l'état solide. Pour les substances pures (telles que les métaux purs), les températures de solidus et de liquidus sont confondues. Pour les substances impures (telles que les alliages métalliques), les températures de solidus et liquidus sont bien souvent différentes. Selon l'invention, la température de liquidus du cordon doit être inférieure à la température de solidus du profilé (1^{e} condition).

Un exemple consiste à utiliser un des profilés les plus courants : un profilé en alliage d'aluminium majoritaire (type 3005) dont la température de solidus se situe dans la plage allant de 630 à 655 °C et un cordon métallique en alliage de zinc majoritaire dont la température de liquidus se situe dans la plage allant de 350 à 500 °C.

Une deuxième condition à laquelle doit aussi satisfaire le cordon métallique est qu'il doit adhérer de manière permanente aux surfaces du profilé. Par surfaces du profilé, on entend aussi bien la surface de la tranche de section du profilé que les parties de surfaces intérieure et extérieure de ce profilé dans le sens de sa longueur au voisinage de la jonction. L'adhésion permanente du cordon aux surfaces du profilé résulte d'un mécanisme d'échanges atomiques se produisant entre le cordon et le profilé, à l'interface entre ces deux derniers.

L'invention se caractérise en ce que le cordon métallique déborde à l'intérieur du profilé. Par intérieur du profilé, on entend l'espace défini entre les surfaces internes du profilé. Ce débordement se fait sur tout ou partie seulement de la longueur du cordon. Par longueur du cordon, on désigne la dimension du cordon, ou l'addition des parties du cordon, mesurée(s) parallèlement au plan de la jonction.

Dans le commerce, des connecteurs en matière plastique (fournisseur CERA) réputés pour laisser passer le tamis moléculaire (dessicant) sous forme de billes, occupent environ 50 % de la section interne du profilé. Afin d'assurer le passage du tamis moléculaire, le débordement du cordon métallique selon l'invention à l'intérieur du profilé occupe de manière préférée au plus 50% de la section interne du profilé. De manière plus préférée, il occupe au plus 40% de cette section et de manière plus préférée encore, il occupe au plus 25% de celle-ci. Le débordement du cordon métallique à l'intérieur du profilé creux occupe de manière préférée au moins 3% de la section interne du profilé, de manière plus préférée, il occupe au moins 5 % de cette section, de manière plus préférée encore, il occupe 10% de celle-ci.

De manière préférée, sur au moins une partie de la longueur du cordon métallique, au moins une partie du débordement de celui-ci à l'intérieur du profilé creux repose et adhère sur une partie de la surface intérieure du profilé. Par surface intérieure du profilé, on entend désigner la surface intérieure de ce profilé dans le sens de sa longueur au voisinage de la jonction.

Selon une autre variante de réalisation du cordon métallique conforme à l'invention et compatible avec le mode de réalisation préféré précédent, une partie de la surface du profilé est perforée et au moins une partie du débordement à l'intérieur du profilé creux se situe à l'opposé de la partie perforée. Par surface intérieure du profilé située à l'opposé de la partie perforée de la surface intérieure du profilé, on désigne la partie de la surface intérieure qui n'est pas perforée ou, tout au moins, une partie de cette surface non perforée.

Dans le commerce, des connecteurs en matière plastique (fournisseur CERA) réputés pour laisser passer le tamis moléculaire (dessicant) sous forme de billes, occupent environ 50 % de la section interne du profilé. De manière préférée, le débordement du cordon métallique à l'intérieur du profilé creux ne dépasse pas 50 % de la section interne du profilé. Afin d'assurer le passage du tamis moléculaire, le débordement du cordon métallique à l'intérieur du profilé creux ne dépasse pas 40 % de la section interne du profilé. De manière plus préférée encore, il occupe moins de 25% de cette section. Le débordement du cordon métallique à l'intérieur du profilé creux occupe de manière préférée au moins 3% de la section interne du profilé, de manière préférée, il occupe au moins 5 % de cette section, de manière plus préférée encore, il occupe 10% de celle-ci.

Dans une autre variante encore du cordon métallique conforme à l'invention compatible aussi avec les modes de réalisation précédents, le cordon affleure à la surface extérieure d'au moins une extrémité des profilés, sur au moins une partie de leur longueur. Par le vocable « affleure », on désigne le fait que l'interface du cordon avec l'atmosphère extérieure aux profilés forme une surface qui prolonge la surface extérieure d'au moins un des profilés. De préférence, il est souhaitable que le cordon affleure à la surface extérieure des deux extrémités des profilés. De manière plus préférée, il est aussi souhaitable que le cordon affleure sur toute sa longueur à la surface extérieure d'au moins un des profilés. De manière idéale, il est souhaitable que le cordon affleure sur toute sa longueur à la surface extérieure des deux extrémités des profilés.

Selon l'invention, le cordon forme une jonction droite ou en angle entre les extrémités du profilé. Par jonction droite, on entend désigner une jonction entre extrémités de profilé découpées selon un plan perpendiculaire à l'axe du profilé. Le profilé résultant de la jonction droite est droit à l'endroit de la jonction. Par jonction en angle, on désigne une jonction entre extrémités de profilé découpées selon un plan formant un angle différent de 90 ° avec l'axe des profilés. Le profilé résultant de la jonction en angle forme un angle différent de 0 ou 180 ° au droit de la jonction.

L'invention concerne aussi un procédé d'obtention d'un cordon métallique joignant les extrémités d'au moins un profilé métallique creux apte à servir d'intercalaire à la réalisation de vitrages multiples isolants, selon lequel ledit procédé comprend au moins les étapes suivantes :
- aboutage des extrémités en maintenant un écart entre elles ;
- insertion et pincement d'un composé métallique entre les deux extrémités, le composé ayant une température de liquidus inférieure à la température de solidus du profilé métallique et au moins une partie du composé se situant à l'intérieur du profilé creux ;
- chauffage de la zone de pincement jusqu'à une température comprise dans une gamme supérieure à la température de liquidus du composé métallique et inférieure à la température de solidus du profilé métallique ;
- maintien dans cette gamme de température jusqu'à fonte complète du composé métallique pincé entre les portions du profilé métallique ;
- refroidissement du profilé et solidification du composé métallique donnant naissance au cordon.

Dans ce qui suit, les termes déjà définis plus haut pour le cordon ont la même signification dans le procédé.

Selon l'invention, le procédé comprend au moins les 5 étapes décrites ci-dessus. Des étapes supplémentaires peuvent être ajoutées et/ou insérées à l'issue de la dernière étape de refroidissement et/ou entre les étapes décrites. Par exemple, une étape de nettoyage ou brossage du cordon métallique, ou d'une partie de celui-ci, peut s'ajouter à la suite des étapes décrites.

En principe, les 5 étapes sont exécutées en séquence et dans l'ordre. En variante, certaines étapes peuvent se chevaucher dans le temps. Par exemple, l'étape de chauffage peut démarrer avant que l'insertion et le pinçage du composé métallique ne soit terminée.

La première étape du procédé consiste en un aboutage des extrémités d'au moins un profilé métallique creux en maintenant un écart entre elles.

Par le vocable aboutage, on entend désigner le rapprochement des extrémités des profilés l'une par rapport à l'autre.

La deuxième étape du procédé réalise l'insertion et le pincement d'un composé métallique entre les deux extrémités du profilé. Selon l'invention, le composé à une température de liquidus inférieure à la température de solidus du profilé métallique et une partie de ce composé se situe à l'intérieur du profilé creux.

Le pincement consiste à rapprocher progressivement les extrémités des profilés jusqu'au contact du composé métallique en au moins un point de chacune de ces extrémités. De préférence, lors de ce rapprochement, on s'arrange pour que les sections des deux extrémités se correspondent. De manière moins préférée, on tolère à la fin du rapprochement un léger décalage, par exemple un décalage parallèle des axes des profilés dans le cas de jonctions droites. On tolérera au maximum un décalage correspondant à l'épaisseur des parois des profilés.

On choisira le composé métallique parmi les métaux aptes à réaliser des brasures avec les métaux composant les profilés.

De manière préférée encore, on appliquera une pression aux zones en contact entre le composé métallique et les extrémités des profilés.

La troisième étape du procédé consiste à chauffer la zone de pincement jusqu'à une température comprise dans une gamme supérieure à la température de liquidus du composé métallique et inférieure à la température de solidus de ce même profilé.

Dans cette étape, le chauffage est apporté par tout type de technique compatible avec la nature et la morphologie des pièces en présence.

Le but est ici de commencer à fondre le composé métallique sans altérer l'état solide du profilé.

Dans la quatrième étape du procédé, on maintient la température dans la gamme précitée jusqu'à fonte complète du composé métallique.

Dans la cinquième étape du procédé, on refroidit le profilé tandis que le composé métallique se solidifie et donne naissance au cordon.

Le refroidissement peut se faire de différentes manières, par exemple en se limitant à couper le chauffage, à laisser refroidir le cordon par simple convection naturelle dans l'atmosphère ambiante ou encore par convection forcée avec un fluide plus froid.

Selon une forme de réalisation particulièrement préférée du procédé conforme à l'invention, on utilise un composé métallique qui comprend un agent de fluxage.

Par exemple, on peut employer un composé métallique qui se présente sous la forme d'un matériau composite formé de parties d'alliages de brasure et de parties d'agent de fluxage.

L'agent de fluxage a pour but d'assurer un bon mouillage de l'alliage de brasure sur les profilés en éliminant les oxydes éventuellement présents sur la surface de ses profilés, en protégeant ces surfaces contre l'oxydation pendant toute la durée de l'opération de chauffage et en baissant la tension superficielle de l'alliage de brasure.

De préférence, l'agent de fluxage sera choisi parmi les agents solides ou pâteux.

Selon une autre forme de réalisation du procédé, on choisit un composé métallique dont la surface est recouverte au moins en partie par l'agent de fluxage.

L'invention concerne aussi un cadre intercalaire formé par au moins un profilé métallique apte à servir d'intercalaire à la réalisation de vitrages multiples isolants, solidarisé par au moins une jonction comprenant un cordon métallique conforme au cordon décrit plus haut.

Par cadre intercalaire, on désigne un cadre périphérique destiné à séparer deux feuilles de verre dans un vitrage multiple.

Le cadre intercalaire conforme à l'invention peut indifféremment être formé par un seul profilé ou une multitude de profilés de formes identiques. Lorsqu'il est formé d'un seul profilé, celui-ci est refermé sur lui-même et forme une figure plane, courbe et/ou polygonale qui ne présente qu'une seule jonction.

Le cordon métallique selon l'invention permet avantageusement de s'affranchir de l'utilisation d'éléments de type connecteurs tels qu'utilisés dans l'art antérieur. Selon une variante de l'invention, le cadre intercalaire est autosuffisant, c'est-à-dire que le cadre intercalaire comprenant le cordon selon l'invention se suffit à lui-même. On entend par là qu'il ne nécessite pas la présence d'éléments additionnels tels que des connecteurs. De préférence, les jonctions du cadre intercalaire selon l'invention sont exclusivement formées du cordon métallique décrit plus haut.

L'invention concerne aussi un vitrage multiple comprenant au moins un cadre intercalaire conforme au cadre intercalaire défini ci-dessus.

De préférence, le vitrage multiple conforme à l'invention comprend au moins une jonction d'au moins un cadre intercalaire étanche aux gaz.

De manière plus préférée encore, toutes les jonctions des cadres intercalaires du vitrage selon l'invention sont étanches aux gaz.

Les cadres intercalaires conformes à l'invention permettent la fabrication de vitrages multiples étanches aux gaz quelles que soient la nature et/ou la quantité des mastics d'étanchéité réticulables utilisés. Dans le cas où l'on utilise des mastics dont l'étanchéité aux gaz n'est pas suffisante, par exemple pour les mastics de type silicone, il est cependant possible de réaliser des vitrages étanches avec des cadres intercalaires conformes à l'invention. De même, il est possible de réduire, voire même de supprimer totalement, la quantité de mastic utilisé au niveau de la jonction pour obtenir un vitrage étanche.

### Liste des figures

La figure 1 représente une vue en plan de deux extrémités 12 de profilé 1 jointes, de manière droite, au moyen du cordon métallique 3.
La figure 2 est une vue en coupe selon AA dans le profilé 1 de la figure 1.
La figure 3 est une vue en coupe selon BB dans le cordon 3 de la figure 1.
La figure 4 illustre une vue en coupe selon CC dans le profilé 1 des figures 1 et 3.
La figure 5 montre une vue en coupe dans le profilé 1 au droit d'une jonction en angle.
La figure 6 montre un cadre intercalaire 7 réalisé avec un seul profilé 1.
La figure 7 représente une coupe dans un double vitrage 11 réalisé avec le cadre intercalaire 7.

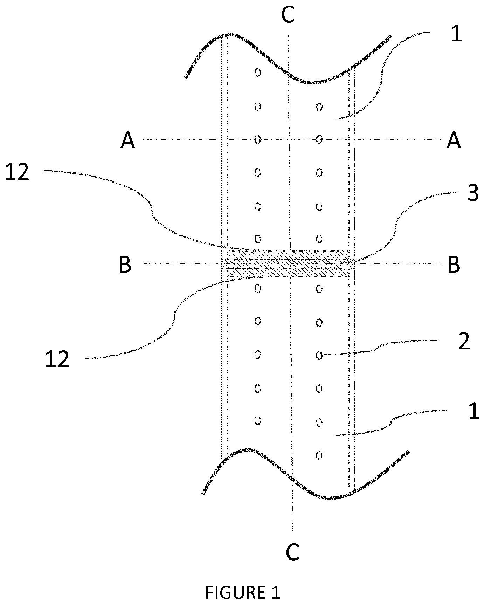

Sur la figure 1 est représentée une vue en plan de deux extrémités 12 de profilé métallique 1 qui comprend les perforations 2 régulièrement espacées. Les extrémités 12 de profilé 1 sont jointes, de manière droite, par un cordon métallique 3.

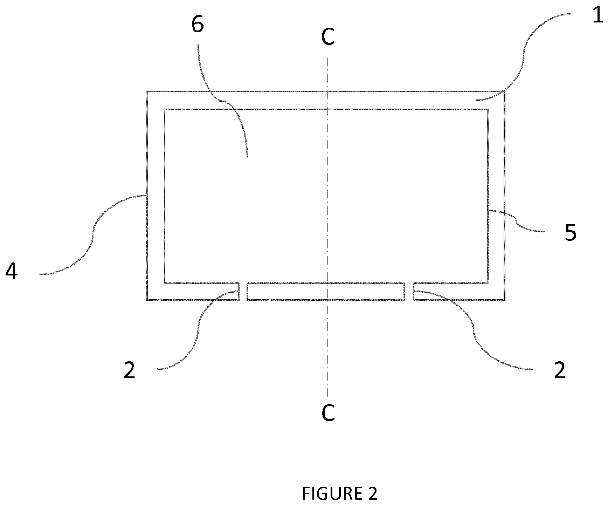

A la figure 2, qui est une vue en coupe selon un plan AA dans le profilé 1, on distingue les perforations 2 dans la face inférieure du profilé 1 avec ses surfaces extérieure 4 et intérieure 5 qui délimitent un espace intérieur 6 au profilé 1.

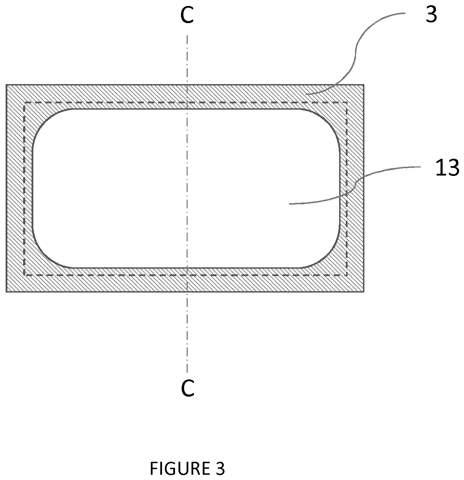

Dans la figure 3 on a représenté une vue en coupe selon un plan BB du profilé 1 dans laquelle, selon une situation idéale, le cordon 3 s'étend sur la totalité du pourtour des extrémités 12 du profilé 1 tout en maintenant une lumière 13 dans l'espace intérieur 6 du profilé 1 permettant le passage de granulés de dessicant.

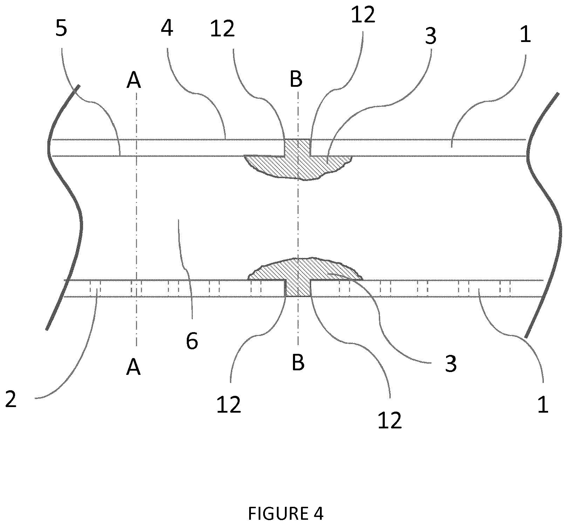

A la figure 4 qui illustre une vue en coupe selon un plan CC dans les figures 1 et 3, on distingue deux faces opposées du profilé 1 présentant leurs extrémités 12 en regard l'une de l'autre et reliées par le cordon 3 qui déborde dans l'espace intérieur 6 du profilé 1, adhère aux surfaces intérieures 5 du profilé 1 et affleure idéalement aux faces extérieures 4 du profilé 1.

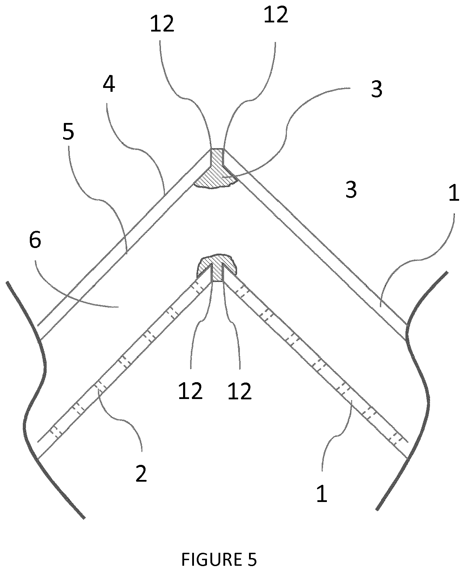

La figure 5 illustre une vue en coupe d'un profilé 1 résultant de la jonction en angle de deux de ses extrémités.

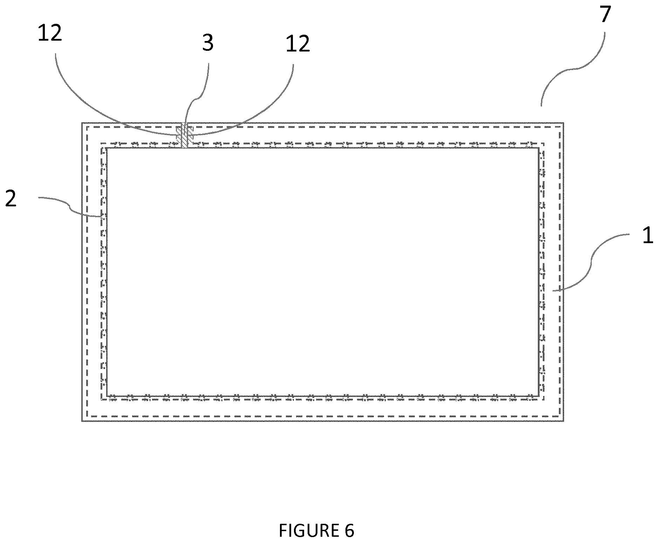

La figure 6 représente une vue en plan d'un cadre intercalaire 7 constitué d'un seul profilé 1 replié quatre fois à angle droit de manière à abouter ses extrémités 12. On distingue aussi sur cette figure le cordon 3 réalisant la jonction droite des extrémités 12 du profilé 1 ainsi que les perforations 2.

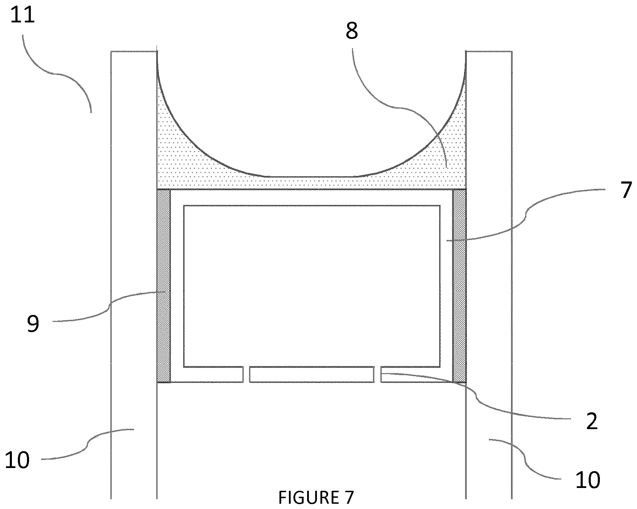

La figure 7 représente une vue en coupe de la bordure d'un vitrage double 11 formé par un cadre intercalaire 7 séparant les feuilles de verre 10. Un caoutchouc butyle 9 assure l'étanchéité aux gaz et à la vapeur d'eau entre le cadre 7 et les feuilles 10 et un mastic d'étanchéité réticulable 8 illustré dans une situation où une quantité réduite de mastic 8 ne remplit pas totalement l'espace de la gorge périphérique du vitrage 11.

### Exemples

On a réalisé une série de jonctions droites de profilés en alliage d'aluminium majoritaire (fournisseur Profilglass) de 6,5 mm de hauteur, 11,5 mm de largeur et 100 mm de longueur, au moyen d'un cordon métallique en alliage de zinc majoritaire, et ayant une température de liquidus allant de 350°C à 400°C, et on a également réalisé une série de cadres intercalaires à partir d'un profilé en alliage d'aluminium majoritaire (fournisseur Profilglass) de 6,5 mm de hauteur et 11,5 mm de largeur, et d'une jonction réalisée avec un cordon métallique tel que décrit ci-dessus.

Les jonctions droites de profilé ont été testées mécaniquement selon un test de flexion 4 points.

Le test de flexion 4 points a été réalisé avec une traverse centrée de part et d'autre de la jonction, avec une distance entre points d'appui intérieurs de 68 mm et une distance entre points d'appui extérieurs de 159 mm. Le déplacement de la traverse s'est fait à une vitesse de 5 mm/min. Les résultats des tests de flexion 4 points se trouvent dans le tableau suivant :

| **Référence éprouvette** | **Contrainte de rupture (Mpa)** | **Faciès de rupture** |
|---|---|---|
| - | - | - |
| Eprouvette 1 | 96,87 | profilé aluminium plié |
| Eprouvette 2 | 96,77 | profilé aluminium plié |
| Eprouvette 3 | 92,3 | profilé aluminium plié |
| Eprouvette 4 | 92,09 | profilé aluminium plié |
| Eprouvette 5 | 115,66 | profilé aluminium plié |
| Eprouvette 6 | 93,4 | profilé aluminium plié |
| Eprouvette 7 | 93,62 | profilé aluminium plié |
| Eprouvette 8 | 89,78 | profilé aluminium plié |
| Eprouvette 9 | 85,3 | profilé aluminium plié |
| Eprouvette 10 | 93,21 | profilé aluminium plié |
| Eprouvette 11 | 95,15 | profilé aluminium plié |
| Eprouvette 12 | 94,47 | profilé aluminium plié |
| Eprouvette 13 | 75,16 | profilé aluminium plié |

Il est à noter que les échantillons comprenant une jonction réalisée au moyen du cordon métallique se plient à côté de la jonction et donc à côté du cordon métallique, ce qui signifie que la jonction est au moins aussi résistante au test que le profilé aluminium lui-même.

3 cadres intercalaires ont été assemblés dans 3 doubles vitrages de 350 mm x 500 mm, composés de deux feuilles de verre float clair de 4 mm d'épaisseur, au moyen d'un cordon en caoutchouc butyle placé de part et d'autre du cadre intercalaire en contact continu avec les deux feuilles de verre. Une lame d'argon a été enfermée dans la cavité des doubles vitrages au moment de l'assemblage donnant un mélange d'argon et d'air, dont la proportion d'argon mesurée juste après assemblage, grâce à un appareil de marque Gasglass® de la firme Sparklike, dépasse 90%. La gorge périphérique du double vitrage, usuellement remplie d'un mastic d'étanchéité a été laissée vide. Les doubles vitrages ont été conservés 24 heures dans les conditions ambiantes de température et d'humidité. La contenance en gaz a été mesurée 24 heures après l'assemblage avec le même appareil Gasglass® et la perte de gaz mesurée s'élevait pour les 3 vitrages à moins de 1%, ce qui est inférieur à la précision attendue pour une telle mesure. Le même protocole a été appliqué sur 3 doubles vitrages de même composition, les cadres intercalaires comportant une seule jonction réalisée avec un connecteur en plastique (fournisseur CERA). Pour une contenance en gaz mesurée à l'appareil Gasglass® de plus de 93,5 % juste après assemblage, on a mesuré pour ces vitrages une contenance en argon de 90 % après 1 h, et de 7 % après 24 h. Enfin, le même protocole a été appliqué sur 3 double vitrages de même composition, avec des cadres intercalaires comportant une seule jonction réalisée avec un connecteur métallique en acier (fournisseur Kronenberg) étanchéifiée avec une masse de butyle placée sur le connecteur, à l'intérieur du profilé. On a mesuré sur ces vitrages, toujours à l'aide d'un instrument Gasglass®, des diminutions de contenance d'argon inférieures à 1%. Ce test comparatif a permis de conclure que les jonctions réalisées avec le cordon métallique tel que décrit ci-dessus, sont bien plus étanches que les jonctions réalisées au moyen d'un connecteur simple, et aussi étanches que les jonctions réalisées au moyen d'un connecteur étanchéifié avec une masse de butyle, telles qu'employées par l'homme du métier pour des applications nécessitant une jonction étanche au gaz.

## Revendications

1. Cordon métallique formant une jonction entre les extrémités d'au moins un profilé métallique creux apte à servir d'intercalaire à la réalisation de vitrages multiples isolants, ledit cordon ayant une température de liquidus inférieure à la température de solidus du profilé et adhérant de manière permanente aux surfaces du profilé **caractérisé en ce que** le cordon métallique déborde à l'intérieur dudit au moins un profilé creux sur au moins une partie de la longueur du cordon.

2. Cordon métallique selon la revendication précédente , **caractérisé en ce que**, sur au moins une partie de la longueur du cordon métallique, le débordement à l'intérieur du profilé creux repose et adhère sur une partie de la surface intérieure du profilé.

3. Cordon métallique selon une quelconque des revendications précédentes , **caractérisé en ce qu'**une partie de la surface du profilé est perforée et **en ce qu'**au moins une partie du débordement à l'intérieur du profilé creux se situe à l'opposé de la partie perforée.

4. Cordon métallique selon une quelconque des revendications précédentes **caractérisé en ce que** le débordement à l'intérieur du profilé creux ne dépasse pas 40%, de préférence pas 25% de la section interne du profilé.

5. Cordon métallique selon une quelconque des revendications précédentes **caractérisé en ce que** le dit cordon affleure à la surface extérieure d'au moins une extrémité du profilé, sur au moins une partie de la longueur dudit cordon.

6. Cordon métallique selon une quelconque des revendications précédentes **caractérisé en ce que** le dit cordon forme une jonction droite ou en angle entre les extrémités du profilé.

7. Procédé d'obtention d'un cordon métallique joignant les extrémités d'au moins un profilé métallique creux apte à servir d'intercalaire à la réalisation de vitrages multiples isolants, **caractérisé en ce que** ledit procédé comprend au moins les étapes suivantes :
- aboutage des extrémités en maintenant un écart entre elles ;
- insertion et pincement d'un composé métallique entre les deux extrémités, le composé ayant une température de liquidus inférieure à la température de solidus du profilé métallique et une partie du composé se situant à l'intérieur du profilé creux ;
- chauffage de la zone de pincement jusqu'à une température comprise dans une gamme supérieure à la température de liquidus du composé métallique et inférieure à la température de solidus du profilé métallique ;
- maintien dans cette gamme de température jusqu'à fonte complète du composé métallique pincé entre les portions du profilé métallique ;
- refroidissement du profilé et solidification du composé métallique donnant naissance au cordon.

8. Procédé selon la revendication précédente, **caractérisé en ce que** le composé métallique comprend un agent de fluxage.

9. Procédé selon la revendication précédente, **caractérisé en ce que** l'agent de fluxage recouvre au moins une partie de la surface du composé métallique.

10. Cadre intercalaire formé par au moins un profilé métallique apte à servir d'intercalaire à la réalisation de vitrages multiples isolants solidarisé par au moins une jonction comprenant un cordon métallique conforme aux revendications 1 à 5.

11. Cadre intercalaire selon la revendication précédente, **caractérisé en ce que** la jonction est exclusivement formée du cordon métallique.

12. Vitrage multiple comprenant au moins un cadre intercalaire conforme à une quelconque des revendications 9 et 10.

13. Vitrage selon la revendication précédente, **caractérisé en ce qu'**au moins une jonction d'au moins un cadre intercalaire est étanche aux gaz.

14. Vitrage selon la revendication 11, **caractérisé en ce que** la totalité des jonctions de ses cadres intercalaires sont étanches aux gaz.

## Patentansprüche

1. Metalllitze, welche eine Verbindung zwischen den Enden wenigstens eines metallischen Hohlprofils bildet, das geeignet ist, als Abstandshalter bei der Herstellung von Mehrfachisolierverglasungen zu dienen, wobei die Litze eine Liquidustemperatur aufweist, die niedriger als die Solidustemperatur des Profils ist, und dauerhaft an den Flächen des Profils haftet, **dadurch gekennzeichnet, dass** die Metalllitze auf wenigstens einem Teil der Länge der Litze ins Innere des wenigstens einen Hohlprofils vorsteht.

2. Metalllitze nach dem vorhergehenden Anspruch, **dadurch gekennzeichnet, dass** auf wenigstens einem Teil der Länge der Metalllitze der Überstand ins Innere des Hohlprofils auf einem Teil der Innenfläche der Profils ruht und an diesem haftet.

3. Metalllitze nach einem der vorhergehenden Ansprüche, **dadurch gekennzeichnet, dass** ein Teil der Oberfläche des Profils perforiert ist, und dadurch, dass sich wenigstens ein Teil des Überstands ins Innere des Hohlprofils gegenüber dem perforierten Teil befindet.

4. Metalllitze nach einem der vorhergehenden Ansprüche, **dadurch gekennzeichnet, dass** der Überstand ins Innere des Hohlprofils 40 %, vorzugsweise 25 % des Innenquerschnitts des Profils nicht überschreitet.

5. Metalllitze nach einem der vorhergehenden Ansprüche, **dadurch gekennzeichnet, dass** die Litze auf wenigstens einem Teil der Länge der Litze mit der Außenfläche wenigstens eines Endes des Profils bündig ist.

6. Metalllitze nach einem der vorhergehenden Ansprüche, **dadurch gekennzeichnet, dass** die Litze eine gerade Verbindung oder Eckverbindung zwischen den Enden des Profils bildet.

7. Verfahren zur Herstellung einer Metalllitze, welche die Enden wenigstens eines metallischen Hohlprofils verbindet, das geeignet ist, als Abstandshalter bei der Herstellung von Mehrfachisolierverglasungen zu dienen, **dadurch gekennzeichnet, dass** das Verfahren wenigstens die folgenden Schritte umfasst:
- Zusammenfügen der Enden, unter Beibehaltung eines Abstands zwischen ihnen;
- Einfügen und Festklemmen einer metallischen Verbindung zwischen den zwei Enden, wobei die Verbindung eine Liquidustemperatur aufweist, die niedriger als die Solidustemperatur des Metallprofils ist, und ein Teil der Verbindung sich im Inneren des Hohlprofils befindet;
- Erwärmen des Klemmbereichs bis auf eine Temperatur in einem Bereich, in dem sie höher als die Liquidustemperatur der metallischen Verbindung und niedriger als die Solidustemperatur des Metallprofils ist;
- Halten in diesem Temperaturbereich bis zum vollständigen Schmelzen der zwischen den Abschnitten des Metallprofils eingeklemmten metallischen Verbindung;
- Kühlen des Profils und Erstarren der metallischen Verbindung, wodurch die Litze entsteht.

8. Verfahren nach dem vorhergehenden Anspruch, **dadurch gekennzeichnet, dass** die metallische Verbindung ein Flussmittel umfasst.

9. Verfahren nach dem vorhergehenden Anspruch, **dadurch gekennzeichnet, dass** das Flussmittel wenigstens einen Teil der Oberfläche der metallischen Verbindung bedeckt.

10. Abstandsrahmen, welcher von wenigstens einem Metallprofil gebildet wird, das geeignet ist, als Abstandshalter bei der Herstellung von Mehrfachisolierverglasungen zu dienen, der durch wenigstens eine Verbindung fest verbunden ist, die eine Metalllitze gemäß den Ansprüchen 1 bis 5 umfasst.

11. Abstandsrahmen nach dem vorhergehenden Anspruch, **dadurch gekennzeichnet, dass** die Verbindung ausschließlich von der Metalllitze gebildet wird.

12. Mehrfachverglasung, welche einen Abstandsrahmen gemäß 1m der Ansprüche 9 und 10 umfasst.

13. Verglasung nach dem vorhergehenden Anspruch, **dadurch gekennzeichnet, dass** wenigstens eine Verbindung wenigstens eines Abstandsrahmens gasdicht ist.

14. Verglasung nach Anspruch 11, **dadurch gekennzeichnet, dass** sämtliche Verbindungen ihrer Abstandsrahmens gasdicht sind.

## Claims

1. Metallic bead forming a join between the ends of at least one hollow metal profile able to serve as a spacer for manufacturing insulating multiple glazing units, said bead having a liquidus temperature below the solidus temperature of the profile and adhering permanently to the surfaces of the profile, **characterized in that** the metallic bead projects inside said at least one hollow profile over at least part of the length of the bead.

2. Metallic bead according to the preceding claim, **characterized in that**, over at least part of the length of the metallic bead, the projection inside the hollow profile rests against and adheres to part of the internal surface of the profile.

3. Metallic bead according to either one of the preceding claims, **characterized in that** a part of the surface of the profile is perforated, and **in that** at least a part of the projection inside the hollow profile is located opposite the perforated part.

4. Metallic bead according to any one of the preceding claims, **characterized in that** the projection inside the hollow profile does not exceed 40%, preferably not 25%, of the internal section of the profile.

5. Metallic bead according to any one of the preceding claims, **characterized in that** said bead is flush with the outer surface of at least one end of the profile, over at least part of the length of said bead.

6. Metallic bead according to any one of the preceding claims, **characterized in that** said bead forms a straight or angled join between the ends of the profile.

7. Method for obtaining a metallic bead joining the ends of at least one hollow metal profile, able to serve as a spacer for manufacturing insulating multiple glazing units, **characterized in that** said method comprises at least the following steps:
- abutting the ends, keeping a space between them;
- inserting and clamping a metallic compound between the two ends, the compound having a liquidus temperature below the solidus temperature of the metal profile, and part of the compound being located inside the hollow profile;
- heating the clamping zone up to a temperature in a range above the liquidus temperature of the metallic compound and below the solidus temperature of the metal profile;
- holding in this temperature range until the metallic compound clamped between the portions of the metal profile has completely melted;
- cooling of the profile and solidification of the metallic compound, resulting in the bead.

8. Method according to the preceding claim, **characterized in that** the metallic compound comprises a fluxing agent.

9. Method according to the preceding claim, **characterized in that** the fluxing agent covers at least part of the surface of the metallic compound.

10. Spacer frame formed by at least one metal profile able to serve as a spacer for manufacturing insulating multiple glazing units, this profile being secured by at least one join comprising a metallic bead according to Claims 1 to 5.

11. Spacer frame according to the preceding claim, **characterized in that** the join is formed exclusively by the metallic bead.

12. Multiple glazing unit comprising at least one spacer frame according to either one of Claims 9 and 10.

13. Glazing unit according to the preceding claim, **characterized in that** at least one join of at least one spacer frame is gas-tight.

14. Glazing unit according to Claim 11, **characterized in that** all of the joins of its spacer frames are gas-tight.
